(19) Europäisches Patentamt / European Patent Office / Office européen des brevets

(11) EP 4 559 968 A1

(12) EUROPEAN PATENT APPLICATION
published in accordance with Art. 153(4) EPC

(43) Date of publication:
**28.05.2025 Bulletin 2025/22**

(21) Application number: **23849890.1**

(22) Date of filing: **19.07.2023**

(51) International Patent Classification (IPC):
***C08L 23/02*** (2025.01) ***C08K 7/14*** (2006.01)
***C08L 23/26*** (2025.01) ***C08L 67/04*** (2006.01)

(52) Cooperative Patent Classification (CPC):
**C08K 7/14; C08L 23/02; C08L 23/26; C08L 67/04**

(86) International application number:
**PCT/JP2023/026427**

(87) International publication number:
**WO 2024/029335 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.08.2022 JP 2022125480**

(71) Applicants:
- **Sumitomo Chemical Company, Limited**
  **Tokyo 103-6020 (JP)**
- **Newlight Technologies, Inc.**
  **Huntington Beach CA 92647 (US)**

(72) Inventor: **ISHIZUKA, Kenta**
**Ichihara-shi**
**Chiba**
**2990195 (JP)**

(74) Representative: **Vossius & Partner**
**Patentanwälte Rechtsanwälte mbB**
**Siebertstrasse 3**
**81675 München (DE)**

# (54) COMPOSITION

(57) A composition contains 98.9 to 39.9 parts by mass of an olefin-based polymer A, 1 to 60 parts by mass of a fiber B, and 0.1 to 30 parts by mass of a polyhydroxyalkanoate-based polymer D. Provided that a total amount of the olefin-based polymer A, the fiber B, and the polyhydroxyalkanoate-based polymer D is 100 parts by mass.



Processed by Luminess, 75001 PARIS (FR)

## Description

### Technical Field

The present invention relates to a composition.

### Background Art

Conventionally, as shown in Patent Literature 1, a composition containing an olefin-based polymer, a polypropylene modified with an unsaturated carboxylic derivative, and a fiber is known.

### Citation List

### Patent Literature

Patent Literature 1: Japanese Unexamined Patent Publication No. H3-137150

### Summary of Invention

### Technical Problem

As described above, in the composition containing a fiber, an appearance defect in which the fiber floats may occur on the surface of a molded body of the composition.

Meanwhile, it is considered that when the crystallization rate of the composition containing a fiber is low, the time until the composition is cooled to become a solid after molding becomes long, and the fiber hardly floats on the surface of the molded body. Therefore, a composition having a low crystallization rate while containing a fiber is required.

The present invention has been made in view of the above problems, and an object thereof is to provide a composition containing an olefin-based polymer A and a fiber B and having a low crystallization rate.

### Solution to Problem

[1] A composition containing:

98.9 to 39.9 parts by mass of an olefin-based polymer A;
1 to 60 parts by mass of a fiber B; and
0.1 to 30 parts by mass of a polyhydroxyalkanoate-based polymer D, provided that a total amount of the olefin-based polymer A, the fiber B, and the polyhydroxyalkanoate-based polymer D is 100 parts by mass.

[2] The composition described in [1], further containing 0.1 to 20 parts by mass of a modified olefin-based polymer C (provided that a total amount of the olefin-based polymer A, the fiber B, and the polyhydroxyalkanoate-based polymer D is 100 parts by mass).
[3] The composition described in [2], in which the modified olefin-based polymer C has a total graft amount of an unsaturated carboxylic acid unit and an unsaturated carboxylic acid derivative unit of 0.3 mass% or more and a melt flow rate, as measured under conditions of a temperature of 230°C and a load of 2.16 kgf, of 300 g/10 min or less.
[4] The composition described in any one of claims [1] to 3, in which the fiber B includes an inorganic fiber.
[5] The composition described in any one of [1] to [4], in which the fiber B includes a glass fiber.
[6] The composition described in any one of [1] to [5], in which the olefin-based polymer A is a propylene-based polymer.
[7] The composition described in any one of [1] to [6], in which the olefin-based polymer A is one or more selected from the group consisting of a propylene homopolymer and a heterophasic propylene polymerization material.
[8] The composition described in any one of [1] to [7], in which the olefin-based polymer A is a propylene homopolymer.
[9] The composition described in any one of [1] to [3], in which the polyhydroxyalkanoate-based polymer D is a poly(3-hydroxyalkanoate)-based polymer.
[10] A molded body containing the composition described in any one of [1] to [9].

## Advantageous Effects of Invention

According to the present invention, there is provided a composition containing an olefin-based polymer A and a fiber B and having a low crystallization rate.

## Description of Embodiments

Hereinafter, some embodiments of the present invention will be described in detail. However, the present invention is not limited to the following embodiments.

(Composition)

A composition according to a first embodiment of the present invention contain an olefin-based polymer A, a fiber B, and a polyhydroxyalkanoate-based polymer D.

This composition contains 98.8 to 40 parts by mass of an olefin-based polymer A, 1 to 60 parts by mass of a fiber B, and 0.1 to 30 parts by mass of a polyhydroxyalkanoate-based polymer D when a total amount of the olefin-based polymer A, the fiber B, and the polyhydroxyalkanoate-based polymer D is 100 parts by mass.

<Olefin-Based Polymer A>

The olefin-based polymer A is a polymer containing 50 mass% or more of a structural unit derived from an olefin having 2 or more and 10 or less carbon atoms (provided that, the total amount of the olefin-based polymer is taken as 100 mass%). Examples of the olefin having 2 or more and 10 or less carbon atoms include ethylene, propylene, 1-butene, isobutene, 1-pentene, 2-methyl-1-butene, 3-methyl-1-butene, 2-methyl-1-pentene, 3-methyl-1-pentene, 4-methyl-1-pentene, 1-hexene, 1-octene, 1-nonene, 1-decene, 1-undecene, and 1-dodecene.

The olefin-based polymer A may contain a structural unit derived from a monomer except olefins having 2 or more and 10 or less carbon atoms. Examples of the monomer except olefins having 2 or more and 10 or less carbon atoms include aromatic vinyl monomers such as styrene; conjugated dienes such as 1,3-butadiene and 2-methyl-1,3-butadiene (isoprene); and non-conjugated dienes such as dicyclopentadiene and 5-ethylidene-2-norbornene. Note that the olefin-based polymer A does not contain an olefin-based polymer modified with a heteroatom (O, S, N, P, or the like)-containing unsaturated compound such as an unsaturated carboxylic acid.

The olefin-based polymer A can be at least one selected from the group consisting of an ethylene-based polymer, a propylene-based polymer, and a butene-based polymer, and may be a combination of any two or more kinds thereof.

(Ethylene-Based Polymer)

An ethylene-based polymer is a polymer containing 50 mass% or more of a structural unit derived from ethylene, and examples thereof include an ethylene homopolymer, an ethylene-1-butene copolymer, an ethylene-1-hexene copolymer, an ethylene-1-octene copolymer, and an ethylene-1-butene-1-hexene copolymer. The ethylene-based polymer may be a combination of two or more ethylene-based polymers.

The ethylene-based polymer may be an olefin-based elastomer having a monomer unit derived from an $\alpha$-olefin having 3 to 20 carbon atoms and a monomer unit derived from ethylene. The content of the monomer unit derived from ethylene in the olefin-based elastomer is preferably 10 to 85 wt% (provided that the total weight of the olefin-based elastomer is 100 wt%). Examples of the $\alpha$-olefin having 3 to 20 carbon atoms include propylene, 1-butene, isobutene, 1-pentene, 2-methyl-1-butene, 3-methyl-1-butene, 1-hexene, 2-methyl-1-pentene, 3-methyl-1-pentene, 4-methyl-1-pentene, 1-octene, 1-nonene, 1-decene, 1-undecene, and 1-dodecene, and propylene, 1-butene, 1-hexene, or 1-octene is preferable.

Examples of the olefin-based elastomer include an ethylene-propylene copolymer elastomer, an ethylene-1-butene copolymer elastomer, an ethylene-1-hexene copolymer elastomer, and an ethylene-1-octene copolymer elastomer. As the olefin-based elastomer, only one kind may be used, or two or more kinds may be used in combination. An ethylene-1-butene copolymer elastomer or an ethylene-1-octene copolymer elastomer is preferable.

(Propylene-Based Polymer)

A propylene-based polymer is a polymer containing 50 mass% or more of a structural unit derived from propylene, and examples thereof include a propylene homopolymer, a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer. The propylene-based polymer may be a combination of two or more kinds of propylene-based polymers. It is suitable that the olefin-based polymer A is a propylene-based polymer.

Here, the propylene-based polymer will be described in detail.

The propylene-based polymer is a polymer containing a propylene unit in an amount of more than 50 mass% when the amount of all constituent units contained in the propylene-based polymer is 100 mass%.

Examples of the propylene-based polymer include a propylene homopolymer and a copolymer of propylene and another monomer copolymerizable with propylene. Such a copolymer may be a random copolymer (hereinafter, also referred to as a polypropylene-based random copolymer) or a block copolymer.

The propylene-based polymer may contain one kind of propylene-based polymer alone, or may contain two or more kinds of propylene-based polymers in any combination at any ratio.

Examples of the combination of two or more kinds of propylene-based polymers include a combination of two or more kinds of propylene homopolymers having different weight average molecular weights and the like, and a combination of the following polymer (I) and polymer (II).

The propylene-based polymer may contain a heterophasic propylene polymerization material. Here, the heterophasic propylene polymerization material means a propylene-based polymer (composition) containing the following polymer (I) and polymer (II), in which the polymer (I) and the polymer (II) are not compatible with each other and form different phases.

Here, the polymer (I) is a polypropylene-based polymer containing a propylene unit in an amount of more than 80 mass% and 100 mass% or less when the amount of all constituent units is 100 mass%. The polymer (I) may be a propylene homopolymer or a copolymer of propylene and another monomer.

Furthermore, the polymer (II) is a polypropylene-based polymer which is a copolymer of a propylene unit and at least one kind of monomer unit selected from the group consisting of an ethylene unit and an $\alpha$-olefin unit having 4 or more carbon atoms.

As each of the polymer (I) and the polymer (II), one kind of polymer may be used alone, or two or more kinds of polymers may be used in combination.

From the viewpoint of improving rigidity and impact resistance of a molded body of a resin composition, the propylene-based polymer is preferably one or more kinds selected from the group consisting of a propylene homopolymer and a heterophasic propylene polymerization material, and is more preferably a propylene homopolymer.

From the viewpoint of further improving the rigidity of a molded body of a composition, the propylene-based polymer has an isotactic pentad fraction (also referred to as a [mmmm] fraction) of preferably 0.97 or more, more preferably 0.98 or more as measured by $^{13}C$-NMR.

It can be said that the closer the isotactic pentad fraction of the propylene-based polymer is to 1, the higher stereoregularity of a molecular structure of the propylene-based polymer is, and the higher crystallinity of a molded body obtained from the propylene-based polymer is.

When the propylene-based polymer is a copolymer, the isotactic pentad fraction can be measured for a chain of propylene units in the copolymer.

From the viewpoint of further improving molding processability of a propylene-based resin composition, the propylene-based polymer has a melt flow rate (MFR) of preferably 1 g/10 min or more, more preferably 2 g/10 min or more as measured in accordance with JIS K7210 under conditions of 230°C and a load of 2.16 kgf. The melt flow rate of the polypropylene-based polymer is preferably 200 g/10 min or less and more preferably 150 g/10 min or less. In an aspect, the melt flow rate of the polypropylene-based polymer is preferably 2 g/10 min to 10 g/10 min.

The propylene-based polymer can be produced, for example, by a polymerization method using a polymerization catalyst.

Examples of the polymerization catalyst include a Ziegler type catalyst; a Ziegler-Natta type catalyst; a catalyst containing a compound containing a transition metal element of Group 4 of the periodic table and having a cyclopentadienyl ring and an alkylaluminoxane; a catalyst containing a compound containing a transition metal element of Group 4 of the periodic table and having a cyclopentadienyl ring, a compound that reacts with the compound to form an ionic complex, and an organic aluminum compound; and a catalyst in which a catalyst component (for example, a compound containing a transition metal element of Group 4 of the periodic table and having a cyclopentadienyl ring, a compound that forms an ionic complex, an organic aluminum compound, or the like) is supported on inorganic particles (for example, silica, clay minerals, or the like) and modified.

Furthermore, as the polymerization catalyst, a prepolymerization catalyst prepared by prepolymerizing a monomer such as ethylene or an $\alpha$-olefin in the presence of the catalyst described above may be used.

Examples of the Ziegler-Natta type catalyst include a catalyst in which a titanium-containing solid transition metal component and an organometallic component are combined.

Specific examples of the above polymerization catalyst include conventionally known catalysts described in Japanese Patent Application Laid-Open Publication Nos. S61-218606, H05-194685, H07-216017, H09-316147, H10-212319, and 2004-182981.

Examples of the polymerization method include bulk polymerization, solution polymerization, and gas phase polymerization. Here, the bulk polymerization refers to a method for performing polymerization using a liquid olefin at a polymerization temperature as a medium. The solution polymerization refers to a method for performing polymerization in an inert hydrocarbon solvent such as propane, butane, isobutane, pentane, hexane, heptane, or octane. The gas phase polymerization refers to a method for polymerizing a monomer in a gaseous state in a medium which is the monomer in a gaseous state.

Examples of a method in the above polymerization method (polymerizing method) include a batch method, a continuous method, and a combination thereof. The polymerizing method may be a multistage method performed using a plurality of polymerization reaction tanks connected in series.

As various conditions (polymerization temperature, polymerization pressure, monomer concentration, catalyst putting amount, polymerization time, and the like) in a polymerization step according to the above polymerization method, any suitable conditions can be appropriately determined according to an intended propylene-based polymer.

In producing the propylene-based polymer, in order to remove a residual solvent contained in the propylene-based polymer polymerized by the above polymerization method and an impurity such as an oligomer by-produced in the polymerization step, the propylene-based polymer polymerized by the above polymerization method may be held, for example, at a temperature at which a residual solvent or an impurity such as an oligomer can be volatilized and at a temperature at which the propylene-based polymer cannot be melted, modified, or the like. Examples of such a method for removing an impurity include any conventionally known suitable methods described in Japanese Patent Application Laid-Open Publication No. S55-75410, Japanese Patent No. 2565753, and the like.

Hereinafter, the propylene homopolymer, the propylene-based random copolymer, and the heterophasic propylene polymerization material, each of which serves as the propylene-based polymer, will be described.

(Propylene Homopolymer)

From the viewpoint of improving the fluidity of the composition and the toughness of a molded body of the composition, the propylene homopolymer has an intrinsic viscosity number [$\eta$] of preferably 0.1 to 2 dL/g, more preferably 0.5 to 1.9 dL/g, still more preferably 0.7 to 1.8 dL/g.

Furthermore, from the viewpoint of improving the fluidity of the composition and the toughness of a molded body of the composition, the propylene homopolymer has a molecular weight distribution Mw/Mn of preferably 3 or more and less than 7, more preferably 3 to 5. Here, Mw represents a weight average molecular weight, and Mn represents a number average molecular weight. Note that the molecular weight distribution is numerical value measured by gel permeation chromatography (GPC).

(Propylene-Based Random Copolymer)

Examples of the propylene-based random copolymer include a random copolymer containing a propylene unit and an ethylene unit (hereinafter, referred to as a random copolymer (1)), a random copolymer containing a propylene unit and an $\alpha$-olefin unit having 4 or more carbon atoms (hereinafter, referred to as a random copolymer (2)), and a random copolymer containing a propylene unit, and ethylene unit, and an $\alpha$-olefin unit having 4 or more carbon atoms (hereinafter, referred to as a random copolymer (3)).

The $\alpha$-olefin having 4 or more carbon atoms that can constitute the propylene-based random copolymer is preferably an $\alpha$-olefin having 4 to 10 carbon atoms. Examples of the $\alpha$-olefin having 4 to 10 carbon atoms include 1-butene, 1-pentene, 1-hexene, 4-methyl-1-pentene, 1-octene, and 1-decene, and 1-butene, 1-hexene, and 1-octene are preferable.

Examples of the random copolymer (2) include a propylene-1-butene random copolymer, a propylene-1-hexene random copolymer, a propylene-1-octene random copolymer, and a propylene-1-decene random copolymer.

Examples of the random copolymer (3) include a propylene-ethylene-1-butene copolymer, a propylene-ethylene-1-hexene copolymer, a propylene-ethylene-1-octene copolymer, and a propylene-ethylene-1-decene copolymer.

The content of the ethylene unit in the random copolymer (1) is preferably 0.1 to 40 mass%, more preferably 0.1 to 30 mass%, and still more preferably 2 to 15 mass%.

The content of the $\alpha$-olefin unit having 4 or more carbon atoms in the random copolymer (2) is preferably 0.1 to 40 mass%, more preferably 0.1 to 30 mass%, and still more preferably 2 to 15 mass%.

The total content of the ethylene unit and the $\alpha$-olefin unit having 4 or more carbon atoms in the random copolymer (3) is preferably 0.1 to 40 mass%, more preferably 0.1 to 30 mass%, and still more preferably 2 to 15 mass%.

The content of the propylene unit in each of the random copolymers (1) to (3) is preferably 60 to 99.9 mass%, more preferably 70 to 99.9 mass%, and still more preferably 85 to 98 mass%.

(Heterophasic Propylene Polymerization Material)

As described above, the polymer (I) that can be contained in the heterophasic propylene polymerization material is a polymer containing a propylene unit in an amount of more than 80 mass% and 100 mass% or less. The total content of the monomer units except the propylene unit in the polymer (I) is usually 0 mass% or more and less than 20 mass%, and may be 0 mass% or 0.01 mass% or more.
Examples of the monomer unit except that propylene unit which may be included in the polymer (I) include an ethylene unit and an α-olefin unit having 4 or more carbon atoms.
The α-olefin unit having 4 or more carbon atoms that can constitute the polymer (I) is preferably an α-olefin having 4 to 10 carbon atoms, more preferably 1-butene, 1-hexene, and 1-octene, and still more preferably 1-butene.
Examples of the polymer (I) include a propylene homopolymer, a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer.
Among them, the polymer (I) is preferably a propylene homopolymer, a propylene-ethylene copolymer, a propylene-1-butene copolymer, and a propylene-ethylene-1-butene copolymer, and more preferably a propylene homopolymer from the viewpoint of the rigidity of a molded body containing the polypropylene-based resin composition.
The molecular weight distribution (Mw/Mn) of the polymer (I) measured by GPC is preferably 3 or more and less than 7 and more preferably 3 to 5.
As described above, the polymer (II) is a copolymer of a propylene unit and at least one kind of monomer unit selected from the group consisting of an ethylene unit and an α-olefin unit having 4 or more carbon atoms.
The total content of the ethylene unit and the α-olefin unit having 4 or more carbon atoms in the polymer (II) is preferably 20 to 80 mass% and more preferably 20 to 60 mass%.
The α-olefin having 4 or more carbon atoms that can constitute the polymer (II) is preferably an α-olefin having 4 to 10 carbon atoms. Examples of the α-olefin that can constitute the polymer (II) include similar examples to the above-described examples of the α-olefin that can constitute the polymer (I).
Examples of the polymer (II) include a propylene-ethylene copolymer, a propylene-ethylene-1-butene copolymer, a propylene-ethylene-1-hexene copolymer, a propylene-ethylene-1-octene copolymer, a propylene-ethylene-1-decene copolymer, a propylene-1-butene copolymer, a propylene-1-hexene copolymer, a propylene-1-octene copolymer, and a propylene-1-decene copolymer, a propylene-ethylene copolymer, a propylene-1-butene copolymer, and a propylene-ethylene-1-butene copolymer are preferable, and a propylene-ethylene copolymer is more preferable.
The content of the polymer (II) in the heterophasic propylene polymerization material is preferably 1 to 50 mass%, more preferably 1 to 40 mass%, still more preferably 5 to 30 mass%, and particularly preferably 8 to 15 mass% when the total content of the polymer (I) and the polymer (II) is 100 mass%.
Examples of the heterophasic propylene polymerization material include a combination of a propylene homopolymer and a (propylene-ethylene) copolymer, a combination of a propylene homopolymer and a (propylene-ethylene-1-butene) copolymer, a combination of a propylene homopolymer and a (propylene-ethylene-1-hexene) copolymer, a combination of a propylene homopolymer and a (propylene-ethylene-1-octene) copolymer, a combination of a propylene homopolymer and a (propylene-1-butene) copolymer, a combination of a propylene homopolymer and a (propylene-1-hexene) copolymer, a combination of a propylene homopolymer and a (propylene-1-octene) copolymer, and a combination of a propylene homopolymer and a (propylene-1-decene) copolymer, in which the polymer (I) is a propylene homopolymer.
Furthermore, other examples of the heterophasic propylene polymerization material include a combination of a (propylene-ethylene) copolymer and a (propylene-ethylene) copolymer, a combination of a (propylene-ethylene) copolymer and a (propylene-ethylene-1-butene) copolymer, a combination of a (propylene-ethylene) copolymer and a (propylene-ethylene-1-hexene) copolymer, a combination of a (propylene-ethylene) copolymer and a (propylene-ethylene-1-octene) copolymer, a combination of a (propylene-ethylene) copolymer and a (propylene-ethylene-1-decene) copolymer, a combination of a (propylene-ethylene) copolymer and a (propylene-1-butene) copolymer, a combination of a (propylene-ethylene) copolymer and a (propylene-1-hexene) copolymer, a combination of a (propylene-ethylene) copolymer and a (propylene-1-octene) copolymer, a combination of a (propylene-ethylene) copolymer and a (propylene-1-decene) copolymer, a combination of a (propylene-1-butene) copolymer and a (propylene-ethylene) copolymer, a combination of a (propylene-1-butene) copolymer and a (propylene-ethylene-1-butene) copolymer, a combination of a (propylene-1-butene) copolymer and a (propylene-ethylene-1-hexene) copolymer, a combination of a (propylene-1-butene) copolymer and a (propylene-ethylene-1-octene) copolymer, a combination of a (propylene-1-butene) copolymer and a (propylene-ethylene-1-decene) copolymer, a combination of a (propylene-1-butene) copolymer and a (propylene-1-butene) copolymer, a combination of a (propylene-1-butene) copolymer and a (propylene-1-hexene) copolymer, a combination of a (propylene-1-butene) copolymer and a (propylene-1-octene) copolymer, a combination of a (propylene-1-butene) copolymer and a (propylene-1-decene) copolymer; a combination of a (propylene-1-hexene) copolymer and a (propylene-1-hexene) copolymer, a combination of a (propylene-1-hexene) copolymer and a (propylene-1-octene)

copolymer, a combination of a (propylene-1-hexene) copolymer and a (propylene-1-decene) copolymer, a combination of a (propylene-1-octene) copolymer and a (propylene-1-octene) copolymer, and a combination of a (propylene-1-octene) copolymer and a (propylene-1-decene) copolymer, in which the polymer (I) is a polymer containing a propylene unit and a monomer unit except the propylene unit. Note that, in the examples of the above combination, the polymer (I) is described first, and the polymer (II) is described later.

The heterophasic propylene polymerization material that can be contained in the polypropylene-based resin composition is preferably a combination of (a propylene homopolymer and a (propylene-ethylene) copolymer, a combination of a propylene homopolymer and a (propylene-ethylene-1-butene) copolymer, a combination of a (propylene-ethylene) copolymer and a (propylene-ethylene) copolymer, a combination of a (propylene-ethylene) copolymer and a (propylene-ethylene-1-butene) copolymer, and a combination of a (propylene-1-butene) copolymer and a (propylene-1-butene) copolymer, and more preferably a combination of a propylene homopolymer and a (propylene-ethylene) copolymer.

The heterophasic propylene polymerization material can be produced by a production method including a multistage polymerization step including a first polymerization step of generating the polymer (I) and a second polymerization step of generating the polymer (II) in the presence of the polymer (I) generated in the first polymerization step. Polymerization of the heterophasic propylene polymerization material can be performed using the catalyst exemplified as the above-described catalyst that can be used for producing a polypropylene-based polymer.

The intrinsic viscosity number (hereinafter, referred to as $[\eta]_I$) of the polymer (I) is preferably 0.1 to 2 dL/g, more preferably 0.5 to 1.5 dL/g, and still more preferably 0.7 to 1.3 dL/g.

The intrinsic viscosity number (hereinafter, referred to as $[\eta]_{II}$) of the polymer (II) is preferably 1 to 10 dL/g, more preferably 2 to 10 dL/g, and still more preferably 5 to 8 dL/g.

Furthermore, a ratio of $[\eta]_{II}$ to $[\eta]_I$ ($[\eta]_{II}/[\eta]_I$) is preferably 1 to 20, more preferably 2 to 10, and still more preferably 2 to 9.

When the polypropylene-based polymer is a heterophasic propylene polymerization material composed of the polymer (I) and the polymer (II) formed by the multistage polymerization step as described above, a part of the polymer (I) generated in the first polymerization step is extracted from a polymerization tank in which the first polymerization step has been performed, the intrinsic viscosity number thereof is determined, the intrinsic viscosity number (hereinafter, referred to as $[\eta]_{Total}$) of the heterophasic propylene polymerization material finally generated in the second polymerization step is determined, and the intrinsic viscosity number of the polymer (II) generated in the second polymerization step is calculated using these intrinsic viscosity numbers and the contents.

Furthermore, when the heterophasic propylene polymerization material composed of the polymer (I) and the polymer (II) is produced by a production method in which the polymer (I) is obtained in the first polymerization step and the polymer (II) is obtained in the second polymerization step, the content of each of the polymer (I) and the polymer (II) and a procedure of measuring and calculating the intrinsic viscosity numbers ($[\eta]_{Total}$, $[\eta]_I$, and $[\eta]_{II}$) are as follows.

From the intrinsic viscosity number ([η]I) of the polymer (I) obtained in the first polymerization step, the intrinsic viscosity number ($[\eta]_{Total}$) measured by the method described above for the final polymer (that is, the heterophasic propylene polymerization material composed of the polymer (I) and the polymer (II)) obtained in the second polymerization step, and the content of the polymer (II) contained in the final polymer, the intrinsic viscosity number $[\eta]_{II}$ of the polymer (II) is calculated by the following formula.

$$\text{Formula: } [\eta]_{II} = ([\eta]_{Total} - [\eta]_I \times X_I)/X_{II}$$

wherein

$[\eta]_{Total}$ represents the intrinsic viscosity number (unit: dL/g) of the final polymer,
$[\eta]_I$ represents the intrinsic viscosity number (unit: dL/g) of the polymer (I),
$X_I$ represents a weight ratio of the polymer (I) to the final polymer, and
$X_{II}$ represents a weight ratio of the polymer (II) to the final polymer.

Note that $X_I$ and $X_{II}$ can be determined from a mass balance in the polymerization step.

Here, the weight ratio $X_{II}$ of the polymer (II) to the final polymer may be calculated by the following formula using the crystal melting heat amount of each of the polymer (I) and the final polymer.

$$\text{Formula: } X_{II} = 1 - (\Delta Hf)_T/(\Delta Hf)_P$$

wherein

$(\Delta Hf)_T$ represents the melting heat amount (unit: cal/g) of the final polymer (polymer (I) and polymer (II)), and
$(\Delta Hf)_P$ represents the melting heat amount (unit: cal/g) of the polymer (I).

(Butene-Based Polymer)

A butene-based polymer is a polymer containing 50 mass% or more of a structural unit derived from 1-butene, and examples thereof include a 1-butene homopolymer, a 1-butene-ethylene copolymer, a 1-butene-propylene copolymer, a 1-butene- 1-hexene copolymer, a 1-butene-1-octene copolymer, a 1-butene-ethylene-propylene copolymer, a 1-butene-ethylene-1-hexene copolymer, a 1-butene-ethylene-1-octene copolymer, a 1-butene-propylene-1-hexene copolymer, and a 1-butene-propylene-1-octene copolymer. The butene-based polymer may be a combination of two or more kinds of butene-based polymers.
The olefin-based polymer A can be produced by using a known polymerization method using a known polymerization catalyst.
The olefin-based polymer A may be an olefin-based polymer derived from fossil fuel or an olefin-based polymer derived from biomass. As the olefin-based polymer A, a recycled olefin-based polymer may be used.

<Fiber B>

Examples of the fiber B include an inorganic fiber and an organic fiber. Examples of the inorganic fiber include a glass fiber, a basalt fiber, a carbon fiber, and a metal fiber (such as a copper fiber or a stainless steel fiber), and examples of the organic fiber include a natural fiber such as a kenaf fiber, a bamboo fiber, or a jute fibers, an aromatic polyamide fiber, an aromatic polyester fiber, a polyester fiber, a nylon fiber, a ramie fiber, and a cellulose fiber.
In order to converge fibers, a convergence agent may be used, and examples of the convergence agent include a polyolefin resin, a polyurethane resin, a polyester resin, an acrylic resin, an epoxy-based resin, starch, and vegetable oil. Further, an acid-modified polyolefin resin, a surface treatment agent, and a lubricant such as paraffin wax may be blended.
In order to improve wettability, adhesiveness, and the like between the fiber and the olefin-based polymer, the fiber may be treated in advance with a surface treatment agent. Examples of the surface treatment agent include a silane-based coupling agent, a titanate-based coupling agent, an aluminum-based coupling agent, a chromium-based coupling agent, a zirconium-based coupling agent, and a borane-based coupling agent. Among them, a silane-based coupling agent and a titanate-based coupling agent are preferable, and a silane-based coupling agent is particularly preferable.
Examples of the silane-based coupling agent include triethoxysilane, vinyltris(β-methoxyethoxy)silane, γ-methacryloxypropyltrimethoxysilane, γ-glycidoxypropyltrimethoxysilane, β-(3,4-epoxycyclohexyl)ethyltrimethoxysilane, N-β-(aminoethyl)-γ-aminopropyltrimethoxysilane, N-β-(amtinoethyl)-y-aminopropylmethyldimethoxysilane, γ-aminopropyltriethoxysilane, N-phenyl-γ-aminopropyltrimethoxysilane, γ-mercaptopropyltrimethoxysilane, and γ-chloropropyltrimethoxysilane. Among them, aminosilanes are preferable, and γ-aminopropyltriethoxysilane and N-β-(aminoethyl)-γ-aminopropyltrimethoxysilane are more preferable.
Examples of the method for treating a fiber with the surface treatment agent include an aqueous solution method, an organic solvent method, and a spray method.
Among these fibers, an inorganic fiber is preferable, and a glass fiber is more preferable.
As the glass fiber, one kind of glass fiber may be used alone, or two or more kinds of glass fibers may be used in combination at any ratio.
A material of the glass fiber is not particularly limited, and any conventionally known suitable glass can be used as the material. Examples of the material of the glass fiber include E glass (alkali-free glass), A glass, C glass, S glass, and D glass. Among these materials, E glass is preferable as the material of the glass fiber. A method for producing a glass fiber is not particularly limited, and as the glass fiber, a glass fiber produced by any conventionally known suitable production method can be used.
The glass fiber may be treated with a binder and/or a surface treatment agent.
From the viewpoint of, for example, improving dispersibility in the component (A): polypropylene-based polymer, it is preferable that the glass fiber is surface-treated with a surface treatment agent. Examples of the surface treatment agent include an organosilane coupling agent, a titanate coupling agent, an aluminate coupling agent, a zirconate coupling agent, a silicone compound, a higher fatty acid, a fatty acid metal salt, and a fatty acid ester.
Examples of the organosilane coupling agent include vinyltrimethoxysilane, γ-chloropropyltrimethoxysilane, γ-methacryloxypropyltrimethoxysilane, γ-aminopropyltrimethoxysilane, and 3-acryloxypropyltrimethoxysilane.
Examples of the titanate coupling agent include isopropyl triisostearoyl titanate, isopropyl tris(dioctyl pyrophosphate) titanate, and isopropyl tri(N-aminoethyl) titanate.
Examples of the aluminate coupling agent include acetoalkoxyaluminum diisopropylate.
Examples of the zirconate coupling agent include tetra(2,2-diallyloxymethyl)butyl, di(tridecyl)phosphite zirconate, and neopentyl (diallyl)oxytrineodecanoyl zirconate.

Examples of the silicone compound include a silicone oil and a silicone resin.

Examples of the higher fatty acid include oleic acid, capric acid, lauric acid, palmitic acid, stearic acid, montanic acid, linoleic acid, rosin acid, linolenic acid, undecanoic acid, and undecenoic acid.

Examples of the fatty acid metal salt include a sodium salt, lithium salt, calcium salt, magnesium salt, zinc salt, and aluminum salt of a fatty acid having 9 or more carbon atoms (for example, stearic acid or montanic acid). Among them, calcium stearate, aluminum stearate, calcium montanate, and sodium montanate are preferable.

Examples of the fatty acid ester include a polyhydric alcohol fatty acid ester such as a glycerin fatty acid ester, an alpha sulfo fatty acid ester, a polyoxyethylene sorbitan fatty acid ester, a sorbitan fatty acid ester, a polyethylene fatty acid ester, and a sucrose fatty acid ester.

The amount of the surface treatment agent used is not particularly limited. The amount of the surface treatment agent used can be preferably 0.01 parts by weight to 5 parts by weight and more preferably 0.1 parts by weight to 3 parts by weight with respect to 100 parts by weight of the glass fiber.

The glass fiber may be treated with a binder. The glass fibers can be bound by treatment with the binder.

Examples of the binder include an epoxy-based binder, an aromatic urethane-based binder, an aliphatic urethane-based binder, an acrylic binder, and a maleic anhydride-modified polyolefin-based binder.

The binder is preferably a convergence agent that melts at a temperature in a composition producing step, and more preferably a convergence agent that melts at 200°C or lower.

As the glass fiber, a so-called chopped strand obtained by cutting a glass strand may be used. From the viewpoint of further improving the rigidity of a molded body containing a polypropylene-based resin composition and further improving the impact strength, a chopped strand is preferably used as the glass fiber.

As the glass fiber, a resin pellet containing a glass fiber (glass fiber-containing resin pellet) may be used. In such a glass fiber-containing pellet, usually, the length (fiber length) of the glass fiber approximately coincides with the length of the glass fiber-containing resin pellet in an extrusion direction.

The glass fiber-containing resin pellet can be produced by any conventionally known suitable production method using any conventionally known suitable resin selected in consideration of the constitution of the polypropylene-based resin composition to be produced, and the like.

The glass fiber-containing resin pellet can be produced by, for example, a pultrusion molding method. The pultrusion molding method is a method for melt-extruding any conventionally known suitable resin which is a material of a glass fiber-containing resin pellet from an extruder while a plurality of continuous glass fibers are drawn out to immerse a bundle of the glass fibers in the resin, cooling the bundle of the glass fibers immersed in the resin, and cutting the bundle of the glass fibers by a pelletizer to integrate the bundle of the plurality of glass fibers.

The content of the glass fiber in the glass fiber-containing resin pellet is preferably 50 to 99.9 mass%.

The fiber diameter of the fiber is not particularly limited, and is usually 3 to 25 μm. The length of the fiber is not particularly limited, and is usually 0.1 to 20 mm.

<Polyhydroxyalkanoate-Based Polymer D>

The polyhydroxyalkanoate-based polymer D is a polyester of hydroxyalkanoic acid. Examples of the hydroxyalkanoic acid include 2-hydroxyalkanoic acid, 3-hydroxyalkanoic acid, and 4-hydroxyalkanoic acid.

Examples of the 2-hydroxyalkanoic acid include glycolic acid, lactic acid, and 2-hydroxybutyric acid. Examples of the polyester of the 2-hydroxyalkanoic acid, that is, poly(2-hydroxyalkanoate)-based polymer include polyglycolic acid and polylactic acid.

Examples of the 3-hydroxyalkanoic acid include 3-hydroxybutyric acid, 3-hydroxypropionic acid, 3-hydroxypentanoic acid, and 3-hydroxyhexanoic acid. The polyester of the 3 hydroxyalkanoic acid, that is, poly(3-hydroxyalkanoate)-based polymer will be described in detail later.

Examples of the 4-hydroxyalkanoic acid include 4-hydroxybutyric acid, 4-hydroxypentanoic acid, and 4-hydroxyhexanoic acid.

The polyhydroxyalkanoate-based polymer D may be a homopolymer of a hydroxyalkanoic acid or a polymer of two or more hydroxyalkanoic acids.

The poly(3-hydroxyalkanoate)-based polymer is a polyhydroxyalkanoate, that is, a polyester of a hydroxyalkanoic acid, and necessarily contains a repeating unit of a 3-hydroxyalkanoate represented by formula (1). In formula (1), R is a hydrogen atom, a halogen atom, an alkyl group having 1 to 15 carbon atoms, a cyano group, an amino group having 1 to 18 carbon atoms, an alkoxy group (alkyloxy group) having 1 to 11 carbon atoms, an amide group having 1 to 20 carbon atoms, an aryl group having 6 to 12 carbon atoms, or a monovalent heterocyclic group having 1 to 9 carbon atoms. These groups may have a substituent. In particular, from the viewpoint of compatibility with a component (for example, the olefin-based polymer A) except the polyhydroxyalkanoate-based polymer D contained in the pellet, R is preferably an alkyl group having 1 to 8 carbon atoms, an amide group having 1 to 20 carbon atoms, or an aryl group having 6 to 8 carbon atoms.

$$[-O-CHR-CH_2-CO-]... \quad (1)$$

Examples of the halogen atom include F, Cl, Br, and I.

The alkyl group having 1 to 15 carbon atoms may be linear or branched. The number of carbon atoms of the alkyl group is preferably 1 to 8 and more preferably 1 to 4. Examples of the alkyl group include a methyl group, an ethyl group, a propyl group, an isopropyl group, a butyl group, an isobutyl group, a sec-butyl group, a tert-butyl group, a pentyl group, an isopentyl group, a 2-methylbutyl group, a 1-methylbutyl group, a hexyl group, an isohexyl group, a 3-methylpentyl group, a 2-methylpentyl group, a 1-methylpentyl group, a heptyl group, an octyl group, an isooctyl group, a 2-ethylhexyl group, a 3,7-dimethyloctyl group, a nonyl group, a decyl group, an undecyl group, a dodecyl group, a tetradecyl group, and a pentadecyl group.

Examples of the amino group having 1 to 18 or 1 to 11 carbon atoms include an amino group, an alkylamino group, a dialkylamino group, an arylamino group, an alkylarylamino group, a benzylamino group, and a dibenzylamino group.

Examples of the alkylamino group include a methylamino group, an ethylamino group, a propylamino group, a butylamino group, a pentylamino group, a hexylamino group, a heptylamino group, an octylamino group, a nonylamino group, a decylamino group, a dodecylamino group, an isopropylamino group, an isobutylamino group, an isopentylamino group, a sec-butylamino group, a tert-butylamino group, a sec-pentylamino group, a tert-pentylamino group, a tert-octylamino group, a neopentylamino group, a cyclopropylamino group, a cyclobutylamino group, a cyclopentylamino group, a cyclohexylamino group, a cycloheptylamino group, a cyclooctylamino group, a 1-adamantamino group, and 2-adamantamino group.

Examples of the dialkylamino group include a dimethylamino group, a diethylamino group, a dipropylamino group, a dibutylamino group, a dipentylamino group, a diisopropylamino group, a diisobutylamino group, a diisopentylamino group, a methylethylamino group, a methylpropylamino group, a methylbutylamino group, a methylisobutylamino group, a dicyclopropylamino group, a pyrrolidino group, a piperidino group, and a piperazino group.

Examples of the arylamino group include an anilino group, a 1-naphthylamino group, a 2-naphthylamino group, an o-toluidino group, a m-toluidino group, a p-toluidino group, a 1-fluoreneamino group, a 2-fluoreneamino group, a 2-thiazoleamino group, and a p-terphenylamino group.

Examples of the alkylarylamino group include an N-methylanilino group, an N-ethylanilino group, an N-propylanilino group, an N-butylanilino group, an N-isopropylanilino group, and an N-pentylanilino group.

Examples of the alkoxy group having 1 to 11 carbon atoms include a methoxy group, an ethoxy group, a propoxy group, an isopropoxy group, a butoxy group, an isobutoxy group, a sec-butoxy group, a tert-butoxy group, a cyclopropoxy group, a cyclobutoxy group, and a cyclopentoxy group.

The "amide group" means a group obtained by removing one hydrogen atom bonded to a nitrogen atom from a carboxylic amide. Examples of the amide group having 1 to 20 carbon atoms include a group represented by $-NH-C(=O)-R^A$ (provided that, $R^A$ is a hydrogen atom or a monovalent organic group) such as a formamide group, an acetamide group, a propionamide group, a butyramide group, a benzamide group, a trifluoroacetamide group, or a pentafluorobenzamide group, and a group represented by $-N(-C(=O)-R^A)(-C(=O)-R^B)$ (provided that, $R^A$ and $R^B$ are each independently a hydrogen atom or a monovalent organic group) such as a diformamide group, a diacetamide group, a dipropioamide group, a dibutyroamide group, a dibenzamide group, a ditrifluoroacetamide group, or a dipentafluorobenzamide group. The organic group can be an alkyl group, an alkoxy group, or an aryl group, which may be substituted with a halogen atom. Among them, the amide group is preferably a formamide group, an acetamide group, a propionamide group, a butyroamide group, or a benzamide group.

Examples of the aryl group having 6 to 12 carbon atoms include a phenyl group, a tolyl group, a xylyl group, a naphthyl group, and a biphenyl group, and among them, a phenyl group, a tolyl group, and a xylyl group are more preferable.

Examples of the heteroatom of the monovalent heterocyclic group having 1 to 9 carbon atoms include N, O, and S, may be saturated or unsaturated, may have a single heteroatom or a plurality of heteroatoms, and may have different types of heteroatoms. Examples of such a heterocyclic group include a thienyl group, a pyrrolyl group, a furyl group, a pyridyl group, a piperidinyl group, a quinolinyl group, an isoquinolinyl group, a pyrimidinyl group, a triazinyl group, and a thiazolyl group.

The repeating unit of the polyhydroxyalkanoate-based polymer D may consist only of one or more kinds of 3-hydroxyalkanoate represented by formula (1), and may have one or more kinds of 3-hydroxyalkanoate represented by formula (1) and one or more kinds of other hydroxyalkanoates.

The polyhydroxyalkanoate-based polymer D preferably contains 50 mol% or more, more preferably 70 mol% or more, of the repeating unit of 3-hydroxyalkanoate represented by formula (1) with respect to the total repeating unit (100 mol%) of the hydroxyalkanoate.

Examples of the 3-hydroxyalkanoate represented by formula (1) include, when R is a hydrogen atom or an alkyl group represented by $C_nH_{2n+1}$ and n is an integer of 1 to 15, 3-hydroxybutyrate with n = 1 (hereinafter, sometimes referred to as 3HB), 3-hydroxyvalerate with n = 2 (hereinafter, sometimes referred to as 3HV), 3-hydroxyhexanoate with n = 3

(hereinafter, sometimes referred to as 3HH), 3-hydroxyoctanoate with n = 5, 3-hydroxyoctadecanoate with n = 15, and 3-hydroxypropionate in which R is a hydrogen atom.

Examples of the polyhydroxyalkanoate-based polymer D having only one repeating unit represented by formula (1) include poly(3-hydroxybutyrate) (hereinafter, sometimes referred to as P3HB).

Examples of the polyhydroxyalkanoate-based polymer D having only a plurality of repeating units represented by formula (1) include poly(3-hydroxybutyrate-co-3-hydroxyhexanoate) (hereinafter, sometimes referred to as P3HB3HH), poly(3-hydroxybutyrate-co-3-hydroxyvalerate) (hereinafter, sometimes referred to as P3HB3HV), and poly(3-hydroxybutyrate-co-3-hydroxypropionate (hereinafter, sometimes referred to as P3HB3HP).

Examples of the other hydroxyalkanoates except the 3-hydroxyalkanoate represented by formula (1) include a repeating unit represented by formula (2) (wherein $R^1$ is a hydrogen atom or an alkyl group represented by $C_nH_{2n+1}$, n is an integer of 1 or more and 15 or less, and m is an integer of 2 to 10).

$$[\text{-O-CHR}^1\text{-C}_m\text{H}_{2m+1}\text{-CO-}]... \qquad (2)$$

Examples of the polyhydroxyalkanoate-based polymer D containing repeating units of formula (1) and formula (2) include poly(3-hydroxybutyrate-co-4-hydroxybutyrate) (for example, the following formula (P3HB4HB)).

From the viewpoint of increasing the melting point, it is preferable that the repeating unit of the polyhydroxyalkanoate-based polymer D contains at least 3-hydroxybutyrate among 3-hydroxyalkanoate represented by formula (1).

The polyhydroxyalkanoate-based polymer D preferably contains 50 mol% or more, more preferably 70 mol% or more, of the repeating unit of 3-hydroxybutyrate with respect to the total repeating unit (100 mol%) of the hydroxyalkanoate.

The polyhydroxyalkanoate-based polymer D may have two or more repeating units of ester, and may be, for example, a di-polymer having two repeating units as described above, a tri-copolymer having three repeating units, and a tetra-copolymer having four repeating units.

Examples of the tri-copolymer include poly(3-hydroxybutyrate-co-3-hydroxyvalylate-co-3-hydroxyhexanoate) (hereinafter, sometimes referred to as (P3HB3HV3HH)).

As described above, the polyhydroxyalkanoate-based polymer D preferably contains 3-hydroxybutyrate among the repeating unit of the 3-hydroxyalkanoate represented by formula (1). A ratio XX of the repeating unit of 3-hydroxybutyrate to 100 mol of the ester repeating unit of the total hydroxyalkanoate is preferably 90 mol% or more, more preferably 95 mol% or more, and still more preferably 98.0 mol% or more.

The ratio XX is usually 100 mol% or less, preferably 99.9 mol% or less, and preferably 99.8 mol% or less.

The form of arrangement of the copolymer may be any form of a random copolymer, an alternating copolymer, a block copolymer, a graft copolymer, and the like.

The polyhydroxyalkanoate-based polymer D may have other ester repeating units except those of formula (1) and formula (2), but the main chain of the other ester repeating units does not contain an aromatic hydrocarbon structure. That is, the polyhydroxyalkanoate-based polymer D is an aliphatic polyester. However, it is possible that a group having an aromatic hydrocarbon group is bonded to carbon in the main chain of the other ester repeating unit.

As described in L. Tripathi., M. C. Factories, 11, 44 (2012), the composition ratio of the repeating unit in the polyhydroxyalkanoate-based polymer D can be determined by calculation from the results of NMR measurement such as 1H-NMR and 13C-NMR.

Furthermore, the polyhydroxyalkanoate-based polymer D may be a blend of two or more kinds of polyhydroxyalkanoate-based polymers.

The weight average molecular weight (Mw) of the polyhydroxyalkanoate-based polymer D can be 10000 to 1000000, and is preferably 20000 to 800000 and more preferably 30000 to 600000. When the weight average molecular weight (Mw) is 10000 or more, a molded body excellent in impact strength and tensile elongation can be obtained. Furthermore, when the weight average molecular weight is 500000 or less, the dispersibility in the olefin-based polymer A is improved. The weight average molecular weight may be 400000 or less, 300000 or less, 200000 or less, or 100000 or less. Note that, in the present specification, the weight average molecular weight (Mw) is measured by GPC using standard polystyrene as a molecular weight standard substance.

The polyhydroxyalkanoate-based polymer D is a thermoplastic resin, and is suitably crystalline.

The melt mass flow rate (MFR (B)) of the polyhydroxyalkanoate-based polymer D as measured according to JIS K7210-2014 under conditions of a temperature of 190°C and a load of 2.16 kgf is preferably 0.1 g/10 min or more and 200 g/10 min or less. The MFR (B) may be 1 g/10 min or more, 3 g/10 min or more, 5 g/10 min or more, or 7 g/10 min or more. The MFR (B) may be 150 g/10 min or less or 100 g/10 min or less, and may be 70 g/100 min or less, 50 g/100 min or less, 30 g/100 min or less, or 20 g/100 min or less.

The melting point (Tm) of the polyhydroxyalkanoate-based polymer D may be 150°C or higher, 155°C or higher, 160°C or higher, 165°C or higher, 170°C or higher, or 175°C or higher. The melting point (Tm) of the polyhydroxyalkanoate-based polymer D can be 220°C or lower, and may be 200°C or lower or 190°C or lower.

The melting point (Tm) of the polyhydroxyalkanoate-based polymer D is measured by the position of a main peak based on melting of a crystal obtained by differential scanning calorimetry (DSC) measurement in accordance with JIS K7121.

The polyhydroxyalkanoate-based polymer D may be produced by microorganisms, and may be derived from a compound (such as a cyclic lactone) derived from a petroleum or plant source.

In the polyhydroxyalkanoate-based polymer D, each repeating unit of the hydroxyalkanoate may consist of only the D-form (R-form) as in the case of a polymer produced from a microorganism, or the repeating unit of the hydroxyalkanoate may include both the D-form (R-form) and the L-form (S-form) as in the case of a polymer derived from a mixture of the D-form (R-form) and the L-form (S-fonn).

In a poly(3-hydroxyalkanoate)-based polymer produced from a microorganism, the repeating unit of formula (1) can be expressed as in the following formula. In formula (BI-1), n represents the degree of polymerization.

[Chemical Formula 1]

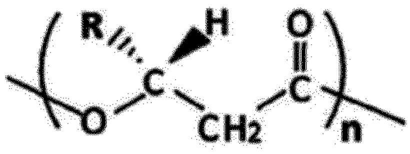

··· (B I −1)

Further, for example, poly-(3-hydroxybutyrate) produced from a microorganism has the structure as described below. In formula (BI-2), n represents the degree of polymerization.

[Chemical Formula 2]

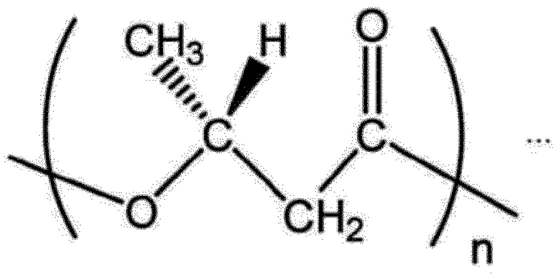

··· (B I −2)

Furthermore, poly-(3-hydroxybutyrate-co-3-hydroxyhexanoate) produced from a microorganism has the structure as described below. In formula (BI-3), m and n represent the degree of polymerization.

[Chemical Formula 3]

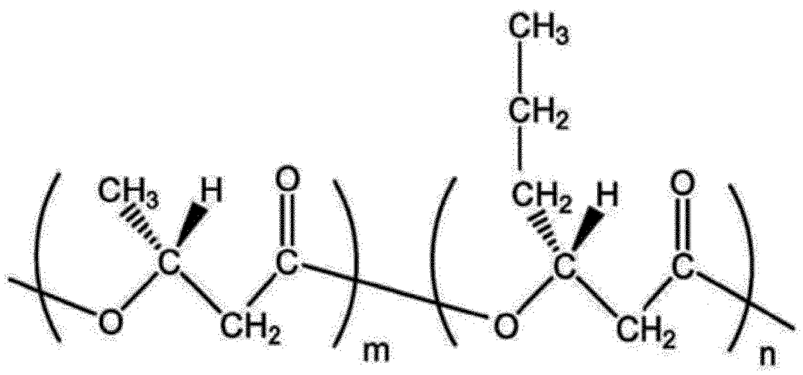

··· (B I −3)

Furthermore, poly-(3-hydroxybutyrate-co-4-hydroxybutyrate) produced from a microorganism has the structure as described below. In formula (BI-4), m and n represent the degree of polymerization.

[Chemical Formula 4]

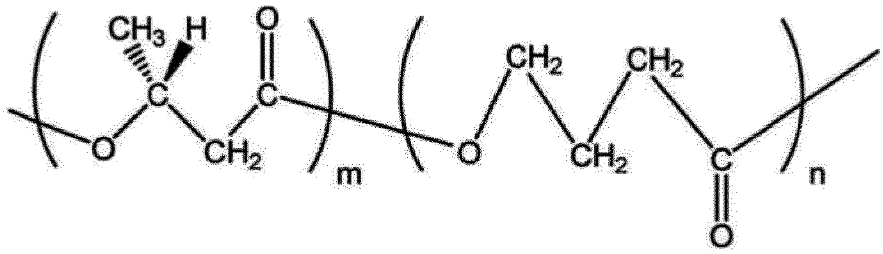

··· (B I − 4)

The polyhydroxyalkanoate-based polymer D can be biodegradable.

For example, the poly(3-hydroxyalkanoate)-based polymer can be produced by microorganisms such as Alcaligenes eutrophus AC32 strain in which PHA synthase enzyme gene derived from Aeromonascaviae was introduced into Alcaligeneseutrophus (international deposit under the Budapest Treaty, international depositary authority: National Institute of Advanced Industrial Science and Technology Center (Center 6, 1-1-1 Higashi, Tsukuba City, Ibaraki Prefecture, Japan), original deposit date: August 12, 1996, transferred on August 7, 1997, accession number FERMBP-6038 (transferred from original deposit FERMP-15786)) (J. Bacteriol., 179, 4821 (1997)).

<Modified Olefin-Based Polymer C>

The composition of the present embodiment may contain a modified olefin-based polymer C in addition to the olefin-based polymer A, the fiber B, and the polyhydroxyalkanoate-based polymer D.

The modified olefin-based polymer means a polymer obtained by bonding a heteroatom-containing unsaturated compound (polar monomer) to an olefin-based polymer by an addition reaction, a graft reaction, or the like. The modification method is not particularly limited, and the modified olefin-based polymer can be obtained by copolymerizing a monomer constituting an olefin-based polymer with a heteroatom-containing unsaturated compound (polar monomer), or by introducing a heteroatom-containing group into a part of a side chain of an olefin-based polymer by a graft reaction such as radical addition, or the like.

Examples of the heteroatom-containing unsaturated compound include an unsaturated carboxylic acid and an unsaturated carboxylic acid derivative, oxazolines, epoxies, and amines.

Examples of the modified olefin-based polymer include an acid-modified olefin-based polymer, an oxazoline group-modified olefin-based polymer, an epoxy group-modified polyolefin-based polymer, and an amino group-modified olefin-based polymer. Each of the oxazoline group and the amino group may have a substituent.

The olefin-based polymer to be modified may be a homopolymer of one type of olefin or a copolymer of two or more types of olefins. Examples of the olefin-based polymer to be modified include a polyethylene-based polymer and a polypropylene-based polymer.

<Acid-Modified Olefin-Based Polymer>

Here, the acid-modified olefin-based polymer means a polymer obtained by bonding an unsaturated carboxylic acid and/or an unsaturated carboxylic acid derivative to an olefin-based polymer by an addition reaction, a graft reaction, or the like.

Examples of the acid-modified olefin-based polymer include an acid-modified ethylene-based polymer and an acid-modified propylene-based polymer.

The acid-modified ethylene-based polymer means a polymer obtained by bonding an unsaturated carboxylic acid and/or an unsaturated carboxylic acid derivative to an ethylene-based polymer by an addition reaction, a graft reaction, or the like.

The ethylene-based polymer to be modified is a polymer containing an ethylene unit in an amount of more than 50 wt% with respect to all constituent units of the polymer. The ethylene unit in the ethylene-based polymer is usually 100 wt% or less.

The acid-modified propylene-based polymer means a polymer obtained by bonding an unsaturated carboxylic acid and/or an unsaturated carboxylic acid derivative to a propylene-based polymer by an addition reaction, a graft reaction, or the like.

The propylene-based polymer to be modified is a polymer containing a propylene unit in an amount of more than 50 wt% with respect to all constituent units of the polymer. The propylene unit in the propylene-based polymer is usually 100 wt% or less. Examples of the propylene-based polymer to be acid-modified include examples and preferable examples described as the propylene-based polymer in the description of the olefin-based polymer A.

Examples of the acid-modified propylene-based polymer include (a) a polymer obtained by graft-polymerizing an unsaturated carboxylic acid and/or an unsaturated carboxylic acid derivative on a propylene homopolymer; (b)a polymer obtained by graft-polymerizing an unsaturated carboxylic acid and/or an unsaturated carboxylic acid derivative on a copolymer obtained by copolymerizing propylene and one or more monomers selected from the group consisting of ethylene and $\alpha$-olefins having 4 or more carbon atoms; and (c) an acid-modified polypropylene-based polymer obtained by graft-polymerizing an unsaturated carboxylic acid and/or an unsaturated carboxylic acid derivative on a block copolymer obtained by homopolymerizing propylene and then copolymerizing one or more monomers selected from the group consisting of ethylene and $\alpha$-olefins having 4 or more carbon atoms.

The propylene-based polymer to be subjected to acid modification may be a single polymer or a combination of two or more polymers in any ratio. Therefore, the propylene-based polymer to be subjected to acid modification can be the above-described heterophasic propylene polymer material.

Examples of the unsaturated carboxylic acid include maleic acid, fumaric acid, itaconic acid, acrylic acid, and methacrylic acid.

Examples of the unsaturated carboxylic acid derivative include an acid anhydride, ester compound, amide compound, imide compound, and metal salt of an unsaturated carboxylic acid. Specific examples of the unsaturated carboxylic acid derivative include maleic anhydride, itaconic anhydride, methyl acrylate, ethyl acrylate, butyl acrylate, methyl methacrylate, ethyl methacrylate, butyl methacrylate, 2-hydroxyethyl methacrylate, maleic acid monoethyl ester, maleic acid diethyl ester, fumaric acid monomethyl ester, fumaric acid dimethyl ester, acrylamide, methacrylamide, maleic acid monoamide, maleic acid diamide, fumaric acid monoamide, maleimide, N-butyl maleimide, and sodium methacrylate.

The unsaturated carboxylic acid is preferably maleic acid and acrylic acid, and the unsaturated carboxylic acid derivative is preferably maleic anhydride and 2-hydroxyethyl methacrylate.

In one embodiment, the acid-modified propylene-based polymer is preferably a modified olefin-based polymer obtained by graft-polymerizing maleic anhydride on an olefin-based polymer containing a propylene unit in an amount of more than 50 wt% in all constituent units.

From the viewpoint of the rigidity and hardness of a molded body obtained from the resin composition, the total graft amount of the unsaturated carboxylic acid unit and the unsaturated carboxylic acid derivative unit in the acid-modified olefin-based polymer is preferably 0.3 wt% or more and 20 wt% or less, and more preferably 10 wt% or less, based on 100 wt% of the amount of the acid-modified olefin-based polymer. Here, when the acid-modified olefin-based polymer contains only one of the unsaturated carboxylic acid unit and the unsaturated carboxylic acid derivative unit, the total amount means the content of the one of the unit.

From the viewpoint of the rigidity and impact strength of a molded body obtained from the resin composition, the graft efficiency of the unsaturated carboxylic acid and/or the unsaturated carboxylic acid derivative of the acid-modified olefin-based polymer is preferably 0.51 or more.

The "graft efficiency of the acid-modified olefin-based polymer" means "the ratio of the amount of the unsaturated carboxylic acid and/or the unsaturated carboxylic acid derivative chemically bonded to the polymer to the total amount of the unsaturated carboxylic acid and/or the unsaturated carboxylic acid derivative chemically bonded to the polymer and the unsaturated carboxylic acid and/or the unsaturated carboxylic acid derivative not chemically bonded to the polymer, contained in the acid-modified olefin-based polymer". The graft efficiency in a graft polymerization of the unsaturated carboxylic acid and/or the unsaturated carboxylic acid derivative can be determined by the following procedures (1) to (9).

(1) 1.0 g of an acid-modified polypropylene-based polymer and 100 mL of xylene are mixed, and refluxed and dissolved.

(2) The obtained xylene solution is added dropwise to 300 mL of acetone under stirring to reprecipitate the acid-modified polypropylene-based polymer.

(3) The reprecipitated acid-modified polypropylene-based polymer is recovered.

(4) The recovered acid-modified polypropylene-based polymer is vacuum-dried at 70°C for 4 hours or longer to obtain a purified acid-modified polypropylene-based polymer.

(5) The purified acid-modified polypropylene-based polymer is hot-pressed to form a film having a thickness of about 100 μm.

(6) 0.5 g of the formed film is placed in 100 mL of xylene and refluxed and dissolved.

(7) One or two drops of a phenolphthalein indicator is immediately added to the obtained xylene solution, titration is performed with a methanol solution of sodium hydroxide adjusted to 0.01 mol/L, and an intermediate point between light pink and deep pink of the solution is defined as an equivalence point A.

Subsequently, a blank test is performed according to the following procedure.

(8) 100 mL of xylene is attached to a reflux apparatus and refluxed for 1 hour.

(9) One or two drops of a phenolphthalein indicator is immediately added to the obtained xylene solution, titration is performed with the same methanol solution of sodium hydroxide (0.01 mol/L), and an intermediate point between light pink and deep pink of the solution is defined as an equivalence point A'.

Next, an amount X1 of the unsaturated carboxylic acid and the unsaturated carboxylic acid derivative contained in the purified acid-modified polypropylene-based polymer is calculated according to the following formula (1) (since the calculated X1 represents the content of the unsaturated carboxylic acid and/or the unsaturated carboxylic acid derivative reacted with the polypropylene-based polymer, X1 is referred to as a graft amount).

Graft amount X1 (mass%) of unsaturated carboxylic acid and/or unsaturated carboxylic acid derivative = $(0.00049 \times (a - a')/W) \times 100$ Formula (1):

In formula (1),

a represents a dropping amount (mL) at the equivalence point A,
a' represents a dropping amount (mL) at the equivalence point A', and
W represents the mass (g) of the film of the procedure (6).

Subsequently, the polypropylene-based polymer that has not been purified is treated similarly to the above procedures (5) to (9), and a content X2 of the unsaturated carboxylic acid and/or the unsaturated carboxylic acid derivative of the acid-modified polypropylene-based polymer that has not been purified is calculated (X2 is a sum of the content (X1) of the unsaturated carboxylic acid and/or the unsaturated carboxylic acid derivative reacted with the polypropylene-based polymer and the content of the unsaturated carboxylic acid and/or the unsaturated carboxylic acid derivative not reacted with the polypropylene-based polymer, that is, the free unsaturated carboxylic acid and/or the unsaturated carboxylic acid derivative).

(10) the calculated X1 and X2 are applied to the following formula to calculate the graft efficiency.

$$\text{Formula: Graft efficiency (\%)} = X1/X2 \times 100$$

The MFR of the modified olefin-based polymer C is preferably 300 g/10 min or less, more preferably 10 g/10 min or more and 200 g/10 min or less, and particularly preferably 20 g/10 min or more, from the viewpoint of mechanical strength and production stability. Note that the MFR is a value measured under a load of 2.16 kgf at 230°C in accordance with JIS K7210-1:2014 and K7210-2:2014.

(Additive)

The composition may contain an additive except fibers as necessary. The additive can be at least one selected from the group consisting of a stabilizer, an anti-bacterial agent, an anti-fungal agent, a dispersing agent, a plasticizer, a flame retardant, a tackifier, a colorant, a metal powder, an organic powder, an organic and inorganic composite fiber, an inorganic whisker, and a filling agent.

Examples of the stabilizer include at least one selected from the group consisting of a lubricant, an anti-aging agent, an antioxidant, a heat stabilizer, a light resistance agent, a weathering agent, a metal deactivator, an ultraviolet absorber, a light stabilizer, and a copper inhibitor. Examples of the light resistance agent include a hindered amine-based light resistance agent.

Examples of the colorant include at least one selected from the group consisting of titanium oxide, carbon black, and an organic pigment. Examples of the metal powder include iron oxide such as ferrite.

Examples of the organic powder include a protein, a polyester (excluding the polyhydroxyalkanoate-based polymer), an aromatic polyamide, cellulose, and vinylon. Examples of the inorganic whisker include potassium titanate whisker.

Examples of the filling agent (filler) include at least one selected from the group consisting of glass powder such as a glass bead, a glass balloon, or a glass flake, silicate mineral, alumina, magnesium oxide, antimony oxide, barium ferrite, strontium ferrite, beryllium oxide, magnesium hydroxide, aluminum hydroxide, basic magnesium carbonate, magnesium carbonate, carbonate mineral, calcium sulfate, magnesium sulfate, basic magnesium sulfate, calcium sulfite, cadmium sulfide, asbestos, mica, calcium carbonate, talc, silica, calcium silicate, hydrotalcite, kaolin, diatomaceous earth, graphite, pumice, ebony powder, cotton flock, cork powder, barium sulfate, fluororesin, cellulose powder, and wood powder.

The shape of the additive when being a particle is not limited, and may be a plate shape, a needle shape, or a fiber shape.

From the viewpoint of the rigidity, impact resistance, and dimensional stability of the pellet and the composition, an inorganic additive is preferable, and talc which is a plate-shaped silicate mineral is more preferable.

The composition may contain only one of the above additives, and may contain a combination of two or more kinds thereof.

In the composition, the additive may be contained in either the olefin-based polymer A or the polyhydroxyalkanoate-based polymer D. The additive may form a dispersed phase different from that of the polyhydroxyalkanoate-based polymer D in the continuous phase of the olefin-based polymer A.

A loss modulus E" of the composition with respect to temperature determined by a dynamic mechanical analysis (DMA) method may have a plurality of peaks (for example, two peaks) in the curve, and preferably one peak (a single peak).

In the DMA method, a measurement sample having a thickness of 0.3 mm and cut into strips is heated stepwise at a heating rate of 2°C/min from a measurement temperature of -150°C in a measurement mode of tension at a measurement frequency of 5 Hz until the sample is melted and cannot be measured. The strain was in a range of 0.1% or less.

When there is only one peak in the curve, the temperature of the peak corresponds to a glass transition temperature Tg. The glass transition temperature Tg of the composition may be -70°C to 150°C.

<Constitution of Composition>

The composition according to the present embodiment contains 98.9 to 39.9 parts by mass of an olefin-based polymer A, 1 to 60 parts by mass of a fiber B, and 0.1 to 30 parts by mass of a polyhydroxyalkanoate-based polymer D. Provided that a total amount of the olefin-based polymer A, the fiber B, and the polyhydroxyalkanoate-based polymer D is 100 parts by mass.

The content of the olefin-based polymer A may be 40 parts by mass or more or 50 parts by mass or more, and may be 98.0 parts by mass or less or 89.9 parts by mass or less.

The content of the fiber B may be 1.5 parts by mass or more, 10 parts by mass or more, 15 parts by mass or more, or 25 parts by mass or more, and may be 55 parts by mass or less or 50 parts by mass or less.

The content of the polyhydroxyalkanoate-based polymer D may be 0.2 parts by mass or more or 0.5 parts by mass or more, and may be 28 parts by mass or less or 25 parts by mass or less.

The composition can further contain 0.1 to 20 parts by mass of a modified olefin-based polymer C. Provided that a total amount of the olefin-based polymer A, the fiber B, and the polyhydroxyalkanoate-based polymer D is 100 parts by mass.

(Effect)

According to the composition of the present embodiment, a composition having a low crystallization rate while containing an olefin-based polymer and a fiber was obtained. Although the reason for this is not clear, it is considered that the polyhydroxyalkanoate-based polymer is added, whereby the olefin-based polymer A and the polyhydroxyalkanoate-based polymer D are co-crystallized, and the crystal growth rate of the olefin-based polymer A is reduced.

(Method for Producing Composition)

A method for producing the above-described composition according to the present embodiment will be described.

This production method includes a step of melting and kneading an olefin-based polymer A, a fiber B, a polyhydroxyalkanoate-based polymer D, and a modified olefin-based polymer C and an additive, which are added as necessary. The temperature during melting and kneading can be 150 to 250°C. Here, all of the components may be

subjected to melt-kneading at a time, or a part of the components may be subjected to the melt-kneading step from the middle. The melt-kneading can be performed by, for example, a twin-screw extruder.

In the present embodiment, the production method may further include a step of extruding the composition obtained by melt-kneading from a die to obtain a strand, a step of solidifying the strand, and a step of cutting the solidified strand to obtain a pellet. In another embodiment, the production method includes a step of extruding the composition obtained by melt-kneading from a die to obtain a strand and a step of cutting the strand while cooling to obtain a pellet.

The strand may be solidified in contact with water, or the strand may be solidified by contact with a gas such as air on a belt or the like. For a die, a cooling device, and a cutting device, known devices can be used.

(Method for Producing Molded Body Using Composition)

A method for producing a molded body according to the present embodiment includes a step of molding the above-described composition.

For molding, a known resin molding method such as an injection molding method, an extrusion molding method, a vacuum molding method, a compression molding method, a press molding method, a foam molding method, a blow molding method, or a rotation molding method can be used. The shape of the molded body to be obtained is not particularly limited. The temperature during molding can be set to 150 to 230°C.

The above-described molded body can be widely used as a resin material.

Examples of use applications of the molded body of the composition of the present invention include external structural members, furniture and interior decorative members, household electric appliance members, toy members, gardening members, automobile members, and packaging materials. Examples of the external structural members include a carport member, a fence member, a gate door member, a gate pillar member, a post member, a cycle port member, a deck member, a sunroom member, a roof member, a terrace member, a handrail member, a shade member, and an awning member, examples of the furniture and interior decorative members include a sofa member, a table member, a chair member, a bed member, a chest member, a cabinet member, and a dresser member, examples of the household electrical appliance members include a member for a watch, a mobile phone member, and a white home electric appliance member, examples of the toy members include a member for a plastic model, a member for a diorama, and a member for a video game main body, examples of the gardening members include a member for a planter, a member for a vase, and a member for a flowerpot, examples of the automobile members include a bumper material, an instrument panel material, and an airbag cover material, and examples of the packaging materials include a food packaging material, a packaging material for fiber, and a packaging material for miscellaneous goods. Further, examples of other use applications include monitor members, office automation (OA) equipment members, medical members, drainage pans, toiletry members, bottles, containers, snow remover members, and various building members.

In particular, the molded body is preferably a component for automobiles. Examples of the automobile component include a bumper, a grill, a side molding, a mud guard, and an under cover. Examples of other automobile components include an instrument panel, a door panel, a pillar, a scuff, a cowl, a toolbox, a finish end, and a tailgate.

Examples

Hereinafter, the present invention will be specifically described with reference to Examples. However, the present invention is not limited to Examples described below.

In the following description, "%" and "part(s)" representing amounts are based on mass unless otherwise specified. Furthermore, the operations described below were performed under the conditions of normal temperature and normal pressure unless otherwise specified.

First, components (components A, B, C, and D) used in Examples will be described.

(1) Olefin-Based Polymer A

As the olefin-based polymer A, the following components (A-1) and (A-2) were used.

Component (A-1): "Sumitomo Noblen U501E1" which is a propylene homopolymer (trade name, manufactured by Sumitomo Chemical Co., Ltd.) (MFR (230°C, load: 2.16 kgf); 100 g/10 min)

Component (A-2): a propylene homopolymer (MFR (230°C, load: 2.16 kgf); 100 g/10 min)

(2) Fiber B

As the fiber B, the following component (B-1) was used.

Component (B-1): a glass fiber "T480H" (trade name, chopped strand manufactured by Nippon Electric Glass Co., Ltd.

(3) Modified Olefin-Based Polymer C

As the modified olefin-based polymer C, the following component (C-1) was used.
Component (C-1): an acid-modified polypropylene-based polymer (maleic anhydride-modified polypropylene-based polymer) produced by a method described in Japanese Patent Application Laid-Open Publication No. 2002-256023 using a propylene homopolymer MFR (230°C, load: 2.16 kgf); 170 (g/10 min), maleic anhydride graft amount; 0.32 (mass%), graft efficiency; 64 (%)

(4) Polyhydroxyalkanoate-Based Polymer D

As the polyhydroxyalkanoate-based polymer D, the following component (D-1) was used.

Component (D-1): poly(3-hydroxybutyrate)
manufactured by Newlight Technologies inc.

-Melt flow rate (190°C, load: 2.16 kgf): 1.6 g/10 min

(5) Master-Batch Pellet D' Containing Polyhydroxyalkanoate-Based Polymer D

10 parts by weight of the component (A-2) and 90 parts by weight of the component (D-1) were weighed, all the components were then mixed, and kneaded under the conditions of a barrel temperature of 180°C and a screw rotation speed of 90 rpm using a twin screw kneader Labo Plastomill having a screw diameter of 20 nun manufactured by Toyo Seiki Seisaku-sho, Ltd., and the molten strand extruded from the die hole was immersed in a cooling water tank, cooled and solidified, and cut with a pelletizer to obtain a component (D'-1).
Physical properties shown in Examples were measured as follows.

(i) Melt Flow Rate (MFR) (Unit: g/10 min)
It was measured at a temperature of 190°C or 230°C and a load of 2.16 kgf according to the method specified in JIS K7210.
(ii) Isothermal Crystallization Time (Crystallization Time, T1/2, Unit: sec)

It was measured using a differential scanning calorimeter (DSC DSC8500 type manufactured by PerkinElmer). The measurement conditions were as follows: 10 mg of a specimen was placed in a nitrogen atmosphere in advance, isothermal crystallization was performed under the condition of a crystallization temperature of 135°C, and the peak top time (1/2 isothermal crystallization time) of the peak of the obtained endothermic curve was measured. The shorter the crystallization time is, the faster the crystallization rate is.

<Example 1>

(1) Production of Propylene-Based Resin Composition

56.7 parts by mass of the component (A-1), 40.0 parts by mass of the component (B-1), 3.3 parts by mass of the component (D'-1), and 0.1 parts by weight of "IRGANOX1010" and 0.1 parts by mass of "IRGAFOS168" as additives were weighed and then mixed to obtain a mixture. Here, the total amount of the component (A), the component (B), and the component (D) was set to 100 parts by mass.
Thereafter, the obtained mixture was melt-kneaded at a set temperature of 200°C and a screw rotation speed of 80 rpm for 4 minutes in an air atmosphere using Labo Plastomill (manufactured by Toyo Seiki Seisaku-sho, Ltd.) to obtain a propylene-based resin composition (E-1).

<Examples 2 and 3>

A propylene-based resin composition and a molded body were produced in the same manner as in Example 1, except that the blending amounts of the component (A-1), the component (B-1), the component (C-1), and the component (D'-1) were changed as shown in Table 1 below, and evaluation was performed. The results are shown in Tables 1 and 2 below.

<Comparative Example 1>

A propylene-based resin composition and a molded body were produced in the same manner as in Example 1, except that the blending amounts of the component (A-1), the component (B-1), and the component (C-1), the component (D'-1) were changed as shown in Table 1 below, and evaluation was performed. The formulation and results are shown in Table 1 below. Note that Table 2 shows that the component (D'-1) as a mixture was separated into the component (A-2) and the component (D-1) and summarized separately for the olefin-based polymer A, the fiber B, the modified olefin-based polymer C, and the polyhydroxyalkanoate-based polymer D.

[Table 1]

| Table 1 | Type | Example 1<br>parts by mass | Example 2<br>parts by mass | Example 3<br>parts by mass | Comparative Example 1<br>parts by mass |
|---|---|---|---|---|---|
| Olefin-based polymer A | A-1 | 56.7 | 53.3 | 56.0 | 60 |
| Fiber B | B-1 | 40 | 40 | 40.6 | 40 |
| Modified olefin-based polymer C | C-1 | - | - | 1.5 | - |
| Master-batch pellet D' containing polyhydroxyalkanoate-based polymer D | D'-1 | 3.3 | 6.7 | 3.4 | - |
| Crystallization time | sec | 419 | 400 | 364 | 288 |

[Table 2]

| Table 2 | Type | Example 1<br>parts by mass | Example 2<br>parts by mass | Example 3<br>parts by mass | Comparative Example 1<br>parts by mass |
|---|---|---|---|---|---|
| Olefin-based polymer A | A-1 | 56.7 | 53.3 | 56.0 | 60 |
| | A-2 | 0.3 | 0.7 | 0.4 | - |
| Fiber B | B-1 | 40 | 40 | 40.6 | 40 |
| Modified olefin-based polymer C | C-1 | - | - | 1.5 | - |
| Polyhydroxyalkanoate-based polymer D | D-1 | 3.0 | 6.0 | 3.0 | - |
| Crystallization time | sec | 419 | 400 | 364 | 288 |

In Examples 1, 2, and 3 containing the polyhydroxyalkanoate-based polymer D, the crystallization time was significantly increased as compared with Comparative Example 1 not containing the polyhydroxyalkanoate-based polymer D.

## Claims

1. A composition comprising:

   98.9 to 39.9 parts by mass of an olefin-based polymer A;
   1 to 60 parts by mass of a fiber B; and
   0.1 to 30 parts by mass of a polyhydroxyalkanoate-based polymer D (provided that a total amount of the olefin-based polymer A, the fiber B, and the polyhydroxyalkanoate-based polymer D is 100 parts by mass).

2. The composition according to claim 1, further comprising 0.1 to 20 parts by mass of a modified olefin-based polymer C (provided that a total amount of the olefin-based polymer A, the fiber B, and the polyhydroxyalkanoate-based polymer D is 100 parts by mass).

3. The composition according to claim 2, wherein the modified olefin-based polymer C has a total graft amount of an unsaturated carboxylic acid unit and an unsaturated carboxylic acid derivative unit of 0.3 mass% or more and a melt flow rate, as measured under conditions of a temperature of 230°C and a load of 2.16 kgf, of 300 g/10 min or less.

4. The composition according to any one of claims 1 to 3, wherein the fiber B includes an inorganic fiber.

5. The composition according to any one of claims 1 to 3, wherein the fiber B includes a glass fiber.

6. The composition according to any one of claims 1 to 3, wherein the olefin-based polymer A is a propylene-based polymer.

7. The composition according to any one of claims 1 to 3, wherein the olefin-based polymer A is one or more selected from the group consisting of a propylene homopolymer and a heterophasic propylene polymerization material.

8. The composition according to any one of claims 1 to 3, wherein the olefin-based polymer A is a propylene homopolymer.

9. The composition according to any one of claims 1 to 3, wherein the polyhydroxyalkanoate-based polymer D is a poly(3-hydroxyalkanoate)-based polymer.

10. A molded body comprising the composition according to any one of claims 1 to 3.

## INTERNATIONAL SEARCH REPORT

International application No.
**PCT/JP2023/026427**

### A. CLASSIFICATION OF SUBJECT MATTER

***C08L 23/02***(2006.01)i; ***C08K 7/14***(2006.01)i; ***C08L 23/26***(2006.01)i; ***C08L 67/04***(2006.01)i
FI: C08L23/02; C08L67/04; C08K7/14; C08L23/26

According to International Patent Classification (IPC) or to both national classification and IPC

### B. FIELDS SEARCHED

Minimum documentation searched (classification system followed by classification symbols)

C08L23/02; C08K7/14; C08L23/26; C08L67/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2006-077063 A (KANEKA CORP.) 23 March 2006 (2006-03-23) claims 1, 3, 6-9, paragraphs [0022], [0023], [0028], [0035]-[0051], examples 12-14 | 1-10 |
| X | JP 2008-088364 A (MITSUI CHEMICALS, INC.) 17 April 2008 (2008-04-17) claims 1-7, 10, paragraphs [0016]-[0018], [0026]-[0028], [0047], [0073]-[0077], examples 1-3 | 1-10 |
| X | JP 2008-239857 A (INOUE MTP KK) 09 October 2008 (2008-10-09) claims 1-4, paragraphs [0020], [0035], [0046]-[0061], examples 4, 5 | 1-3, 6-10 |
| A | | 4-5 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 October 2023** | **10 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/026427**

| Patent document cited in search report | Publication date (day/month/year) | Patent family member(s) | Publication date (day/month/year) |
|---|---|---|---|
| JP 2006-077063 A | 23 March 2006 | (Family: none) | |
| JP 2008-088364 A | 17 April 2008 | (Family: none) | |
| JP 2008-239857 A | 09 October 2008 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H3137150 A
- JP S61218606 A
- JP H05194685 A
- JP H07216017 A
- JP H09316147 A
- JP H10212319 A
- JP 2004182981 A
- JP S5575410 A
- JP 2565753 B
- JP 2002256023 A


### Non-patent literature cited in the description


- *J. Bacteriol.*, 1997, vol. 179, 4821